# EUROPÄISCHE PATENTANMELDUNG

(11) **EP 2 784 977 A1**
(43) Veröffentlichungstag der Anmeldung: **01.10.2014**
(21) Anmeldenummer: 13161562.7
(22) Anmeldetag: 28.03.2013
(51) Int. Cl.: H04L 12/10, H04L 12/40, H04L 12/46, H04L 25/02, H02H 9/00

(54) **Kopplereinheit zur Energie- und Datenübertragung in explosionsgefährdeten Umgebungen über Ethernet-Leitungen**

(71) Anmelder: Siemens Aktiengesellschaft, 80333 München (DE)
(72) Erfinder: Gottron, Jens, 76185 Karlsruhe (DE); Weiler, Christoph, 75015 Bretten (DE)

(57) **Zusammenfassung**

Zur Energie- und Datenübertragung in explosionsgefährdeten Umgebungen über Ethernet-Leitungen wird eine Kopplereinheit mit einem versorgungsseitigen Anschluß (10) für zumindest vieradrige Ethernet-Leitungen zur kombinierten Energie- und Datenübertragung vorgeschlagen. Mit dem versorgungsseitigen Anschluß (10) ist eine Weicheneinheit (111,113) zur frequenzselektiven Auskopplung eines über eine versorgungsseitige Ethernet-Leitung übertragenen Datensignals und eines Versorgungsstroms verbunden. Verbraucherseitig ist ein Anschluß für Ethernet-Leitungen zur kombinierten Energie- und Datenübertragung über zwei Adern (20) vorgesehen. Mit dem verbraucherseitigen Anschluß (20) ist eine Mischereinheit (21) zur frequenzselektiven Ankopplung eines über eine verbraucherseitigen Ethernet-Leitung (20) zu übertragenden Datensignals und eines geregelten Versorgungsstroms (15) an ein gemeinsames Adernpaar verbunden. Die Kopplereinheit ermöglicht eine Adaption von nicht eigensicherem Power over Ethernet auf eigensicheres Power over Ethernet, das über zweiadrige Leitungen bereitgestellt wird.

## Beschreibung

Eine kombinierte Energie- und Datenübertragung über Ethernet-Leitungen ist beispielsweise auf Grundlage von als Power over Ethernet (PoE) bezeichneten standardisierten Verfahren möglich. Mit Power over Ethernet kann ein separater Energieversorgungsanschluß für Kommunikationsgeräte entfallen. Für eine kombinierte Energie- und Datenübertragung mittels Power over Ethernet sind zwei Standards definiert worden. Entsprechend Standard IEEE 802.3af können pro Ethernet-Port 15,4 Watt Leistung bereitgestellt werden. Standard IEEE 802.3at (Power over Ethernet Plus - PoE+) stellt demgegenüber eine Weiterentwicklung dar und ermöglicht eine Bereitstellung von 60 Watt Leistung pro Ethernet-Port.

Bei 10Base-T- und 100Base-TX-Ethernet-Verbindungen entsprechend IEEE 802.3af werden nur zwei von vier Adernpaare für eine Datenübertragung genutzt. Für eine Energieübertragung können daher die beiden anderen Adernpaare verwendet werden. Alternativ hierzu können die bereits für eine Datenübertragung genutzten Adernpaare auch für eine überlagerte Energieübertragung verwendet werden. Bei 1000Base-T-Ethernet-Verbindungen entsprechend IEEE 802.at werden alle vier Adernpaare für eine Energieübertragung genutzt.

Aus EP 1 883 179 B1 ist eine Sicherheitsvorrichtung für ein eigensicheres Ethernet-Kommunikationssystem bekannt, das in einer explosionsgefährdeten Umgebung verwendet werden kann. Die Sicherheitsvorrichtung weist einen Eingang zum Empfangen von Datensignalen, einen Ausgang zum Senden von Datensignalen sowie ein Energiebegrenzungsmittel auf. Das Energiebegrenzungsmittel umfaßt zwei in Serie geschaltete Kondensatoren zum Sperren einer Gleichstromkomponente von Datensignalen, die in der Sicherheitsvorrichtung empfangen werden. Dagegen werden Wechselstromkomponenten der empfangenen Datensignale zur Weiterleitung durchgelassen. Energie und Daten werden entsprechend der in EP 1 883 179 B1 beschriebenen Sicherheitsvorrichtung über separate Adern einer Ethernet-Leitung übertragen. Anforderungen an eigensichere elektrische Betriebsmittel sind darüber hinaus in IEC/EN 60079-11 beschrieben.

In US 2002/0015273 A1 ist ein Verfahren zur eigensicheren Speisung mindestens einer Last in einem explosionsgefährdeten Bereich beschrieben, bei dem die Last aus mindestens einer Spannungsversorgung über einen Versorgungskreis gespeist und eine Speisespannung der Last fortlaufend überwacht wird. Wird ein Abfall der Speisespannung unter einen vorgegebenen Wert festgestellt, wird die Last durch ein Schaltmittel abgetrennt, bevor eine für eine Zündung ausreichende Energiemenge erzeugt worden ist. Auf diese Weise wird eine Zündfähigkeit eines Funkens im Fall einer Serienunterbrechung verhindert, beispielsweise bei einem Leitungsbruch, einer Leitungsunterbrechung oder einer Trennung von Spannungsversorgung und Last.

Der vorliegenden Erfindung liegt die Aufgabe zugrunde, eine Vorrichtung zur eigensicheren kombinierten Energie- und Datenüberragung über Ethernet-Leitungen anzugeben, die eine Kopplung eines über eine zweiadrige Ethernet-Leitung gespeisten Feldgeräts an ein übliches speisendes Power over Ethernet Gerät ermöglicht.

Diese Aufgabe wird erfindungsgemäß durch eine Koppplereinheit mit den in Patentanspruch 1 angegebenen Merkmalen gelöst. Vorteilhafte Weiterbildungen der vorliegenden Erfindung sind in den abhängigen Patentansprüchen angegeben.

Die erfindungsgemäße Kopplereinheit zur Energie- und Datenübertragung in explosionsgefährdeten Umgebungen über Ethernet-Leitungen umfaßt einen versorgungsseitigen Anschluß für zumindest vieradrige Ethernet-Leitungen zur kombinierten Energie- und Datenübertragung. Außerdem ist eine mit dem versorgungsseitigen Anschluß verbundenen Weicheneinheit zur frequenzselektiven Auskopplung eines über eine versorgungsseitige Ethernet-Leitung übertragenen Datensignals an eine erste Sende- und Empfangseinheit und eines Versorgungsstroms an einen Spannungs- und Stromregler vorgesehen. Eine zweite Sende- und Empfangseinheit ist über eine invertierende medienunabhängige Schnittstelle mit der ersten Sende- und Empfangseinheit verbunden. Dabei ist die zweite Sende- und Empfangseinheit zur Datenübertragung über eine zweiadrige Ethernet-Leitung ausgestaltet.

Des weiteren ist erfindungsgemäß ein verbraucherseitiger Anschluß für Ethernet-Leitungen zur kombinierten Energie- und Datenübertragung über zwei Adern vorgesehen. Mit dem verbraucherseitigen Anschluß ist eine Mischereinheit zur frequenzselektiven Ankopplung eines über eine verbraucherseitigen Ethernet-Leitung zu übertragenden Datensignals von der zweite Sende- und Empfangseinheit und eines durch den Spannungs- und Stromregler geregelten Versorgungsstroms an ein gemeinsames Adernpaar verbundenen. Auf diese Weise ist eine normgerechte Strom- und Spannungsbegrenzung sichergestellt. Die erfindungsgemäße Kopplereinheit kann beispielweise in einen Switch integriert sein und ermöglicht eine eigensichere Versorgung von Ethernet-Kommunikationsgeräten in explosionsgefährdeten Bereichen über zweiadrige Leitungen. Verbraucherseitig kann eine Mehrzahl von Anschlüssen für Ethernet-Leitungen zur kombinierten Energie- und Datenübertragung über zwei Adern vorgesehen sein.

Insgesamt ermöglicht die vorliegende Erfindung eine Power over Ethernet Versorgung von Feldgeräten in explosionsgefährdeten Bereichen ausgehend von einem üblichen Power over Ethernet Anschluß an einem speisenden Ethernet-Gerät. Die erfindungsgemäße Kopplereinheit adaptiert also nicht eigensicheres Power over Ethernet auf eigensicheres Power over Ethernet, das über zweiadrige Leitungen bereitgestellt wird.

Entsprechend einer besonders vorteilhaften Weiterbildung der vorliegenden Erfindung umfaßt die Weicheneinheit einen ersten Übertrager, der mit einem Adernpaar für eine Übertragung von Empfangssignalen verbunden ist. Dabei ist der erste Übertrager über eine erste Sperrkondensatoranordnung mit einem ersten Anschlußpaar an der ersten Sende- und Empfangseinheit verbunden. In analoger Weise umfaßt die Weicheneinheit einen zweiten Übertrager, der mit einem Adernpaar für eine Übertragung von Sendesignalen verbunden ist. Dementsprechend ist der zweite Übertrager über eine zweite Sperrkondensatoranordnung mit einem zweiten Anschlußpaar an der ersten Sende- und Empfangseinheit verbunden. Außerdem umfaßt die Weicheneinheit einen Gleichrichter, der versorgungsseitig mit dem Spannungs- und Stromregler verbunden ist. Darüber hinaus umfaßt die Mischereinheit entsprechend einer weiteren Ausgestaltung der erfindungsgemäßen Koppplereinheit einen Übertrager, der mit der zweiten Sende- und Empfangseinheit verbunden ist. Der Übertrager ist über eine Sperrkondensatoranordnung mit dem verbraucherseitigen Anschluß verbunden. Des weiteren umfaßt die Mischereinheit einen Gleichrichter, der über einen Übertrager an den Spannungs- und Stromregler angeschlossen und mit dem verbraucherseitigen Anschluß verbunden ist. Vorzugsweise ist dem Spannungs- und Stromregler versorgungsseitig ein Spannungsbegrenzer vorgeschaltet. Auf diese Weise wirkt die Kopplereinheit wirkt datenseitig als Repeater und senkt zudem Versorgungsspannungen und -ströme unter galvanischer Trennung auf ein in explosionsgefährdeten Umgebungen zulässiges Niveau ab.

Der Spannungs- und Stromregler kann beispielsweise einen Powered Device Controller bzw. eine Steuerungseinheit für ein mittels Power over Ethernet gespeistes Gerät umfassen. Diese Steuerungseinheit steuert einen ersten Gleichspannungswandler, der für eine Spannungsversorgung der ersten und der zweiten Sende- und Empfangseinheit vorgesehen ist, und einen zweiten Gleichspannungswandler an, der für eine Spannungsversorgung eines mit dem verbraucherseitigen Anschluß verbundenden Kommunikationsgeräts vorgesehen ist. Auf diese Weise ist eine zuverlässige Regelung und Begrenzung von Versorgungsspannungen und -ströme gewährleistet.

Die zweite Sende- und Empfangseinheit ist vorzugsweise als BroadR-Reach-Transceiver oder als äquivalenter Transceiver ausgestaltet. Derartige Transceiver zeichnen sich durch eine sehr gute elektromagnetische Verträglichkeit aus, die insbesondere in explosionsgefährdeten Umgebungen äußerst vorteilhaft ist, und ermöglichen eine Ethernet-Realisierung auf Basis zweiadriger Leitungen.

Die vorliegende Erfindung wird nachfolgend an einem Ausführungsbeispiel anhand der Zeichnung näher erläutert. Es zeigt
- Figur 1: ein Blockschaltbild einer Kopplereinheit zur Energie- und Datenübertragung in explosionsgefährdeten Umgebungen über Ethernet-Leitungen,
- Figur 2: eine schematische Darstellung eines industriellen Kommunikationssystems mit einem speisenden Power over Ethernet Kommunikationsgerät, einer Kopplereinheit gemäß Figur 1 und einem gespeisten Power over Ethernet Kommunikationsgerät,
- Figur 3: eine schematische Darstellung einer Variante des Kommunikationssystems gemäß Figur 2 mit einer Mehrzahl eigensicher gespeister Power over Ethernet Kommunikationsgeräte,
- Figur 4: eine schematische Darstellung einer Variante des Kommunikationssystems gemäß Figur 2 mit gespeisten Power over Ethernet Kommunikationsgeräten innerhalb einer Ringtopologie.

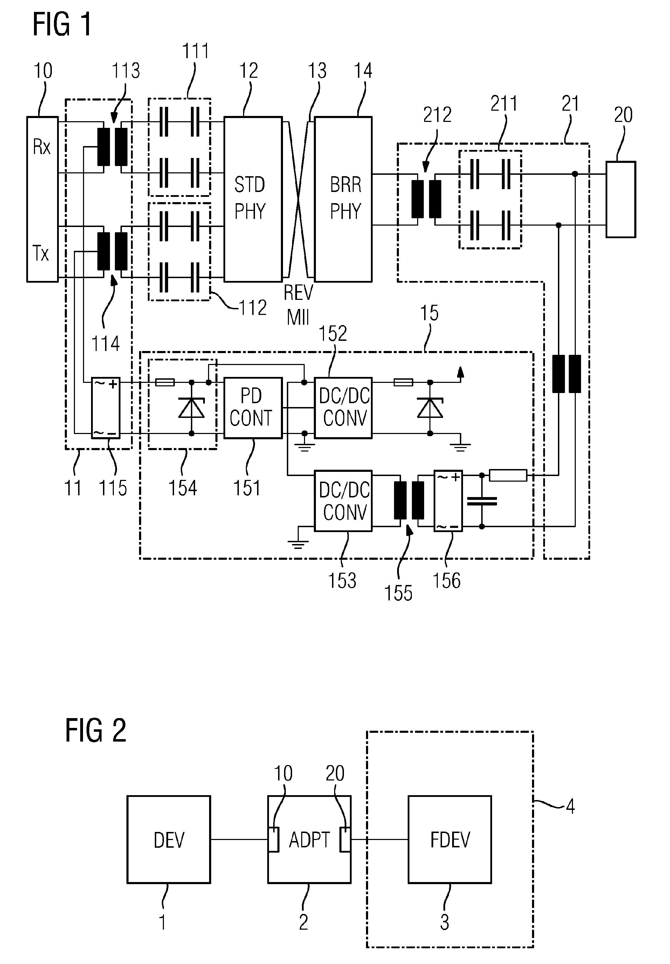

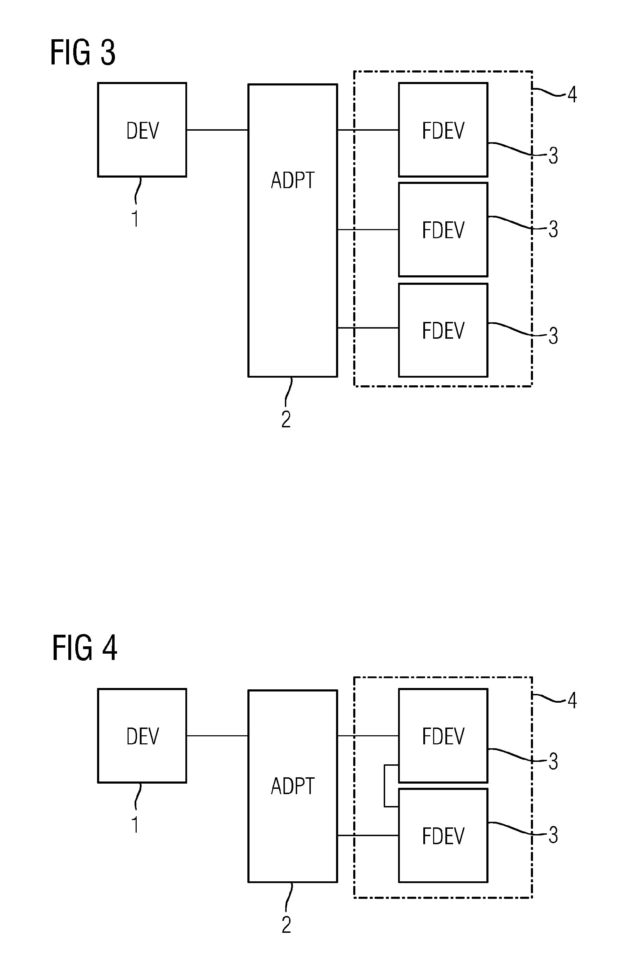

Die in Figur 1 durch ein Blockschaltbild dargestellte Kopplereinheit dient zur Energie- und Datenübertragung in explosionsgefährdeten Umgebungen über Ethernet-Leitungen. Entsprechend dem in Figur 2 dargestellten Kommunikationssystem ist die Kopplereinheit 2 zwischen einem speisenden Power over Ethernet Kommunikationsgerät 1 und einem eigensicher gespeisten Kommunikationsgerät 3 angeschlossen. Das speisende Power over Ethernet Kommunikationsgerät 1 ist beispielsweise einem Leitsystem eines industriellen Automatisierungssystems zugeordnet, während das gespeiste Kommunikationsgerät 3 in einem explosionsgefährdeten Bereich 4 angeordnet und beispielsweise einem Feldgerät eines industriellen Automatisierungssystems zugeordnet ist. Grundsätzlich kann auch die Kopplereinheit 2 im explosionsgefährdeten Bereich 4 angeordnet sein, wenn eine eigensichere Leitungsanbindung gewährleistet und die Kopplereinheit 2 einschließlich ihrer Anschlüsse entsprechend einer einschlägigen Zündschutzart geschützt ist. Insbesondere kann die Kopplereinheit 2 auch in einen Switch integriert sein. Entsprechend der in Figur 3 dargestellten Variante des Kommunikationssystems gemäß Figur 2 ist verbraucherseitig eine Mehrzahl von Anschlüssen für Ethernet-Leitungen zur kombinierten Energie- und Datenübertragung über vorzugsweise zwei Adern vorgesehen.

Die Kopplereinheit 2 weist einen versorgungsseitigen Anschluß 10 für zumindest vieradrige Ethernet-Leitungen zur kombinierten Energie- und Datenübertragung und einen verbraucherseitigen Anschluß 20 für Ethernet-Leitungen zur kombinierten Energie- und Datenübertragung über zwei Adern auf. Mit dem versorgungsseitigen Anschluß 10 ist eine Weicheneinheit 11 verbundenen, die zur frequenzselektiven Auskopplung eines über eine versorgungsseitige Ethernet-Leitung übertragenen Datensignals an eine erste Sende- und Empfangseinheit 12 und eines Versorgungsstroms an einen Spannungs- und Stromregler 15 ausgestaltet ist. Die erste Sende- und Empfangseinheit 12 ist im vorliegenden Ausführungsbeispiel durch ein übliches PHY-Halbleiterbauelement realisiert.

Die Weicheneinheit 11 umfaßt einen ersten Übertrager 113, der mit einem Adernpaar für eine Übertragung von Empfangssignalen (Rx) verbunden ist. Über eine erste Sperrkondensatoranordnung 111 ist der erste Übertrager 113 mit einem ersten Anschlußpaar der ersten Sende- und Empfangseinheit 12 verbunden. Außerdem umfaßt die Weicheneinheit 11 einen zweiten Übertrager 114, der mit einem Adernpaar für eine Übertragung von Sendesignalen (Tx) verbunden ist. In analoger Weise ist der zweite Übertrager 114 über eine zweite Sperrkondensatoranordnung 112 mit einem zweiten Anschlußpaar der ersten Sende- und Empfangseinheit 12 verbunden. Darüber hinaus umfaßt die Weicheneinheit 11 einen Gleichrichter 115, der versorgungsseitig mit dem Spannungs- und Stromregler 15 verbunden ist.

Dem Spannungs- und Stromregler 15 ist versorgungsseitig ein Spannungsbegrenzer 154 vorgeschaltet, der im vorliegenden Ausführungsbeispiel durch eine Zener-Diode realisiert ist. Des weiteren umfaßt der Spannungs- und Stromregler 15 eine Steuerungseinheit 151 für ein mittels Power over Ethernet gespeistes Gerät. Diese Steuerungseinheit 151 kann beispielsweise durch einen üblichen PoE Powered Device Controller realisiert sein und steuert im vorliegenden Ausführungsbeispiel einen ersten 152 und einen zweiten Gleichspannungswandler 153 an. Dabei ist der erste Gleichspannungswandler für eine Spannungsversorgung der ersten 12 und einer zweiten Sende- und Empfangseinheit 14 vorgesehen, während der zweite Gleichspannungswandler 153 für eine Spannungsversorgung eines mit dem verbraucherseitigen Anschluß 20 verbundenden Kommunikationsgeräts vorgesehen ist.

Die zweite Sende- und Empfangseinheit 14 ist über eine invertierende medienunabhängige Schnittstelle bzw. ein Reverse MII (media independant interface) mit der ersten Sende- und Empfangseinheit 12 verbunden. Dabei ist die zweite Sende- und Empfangseinheit 14 zur Datenübertragung über eine zweiadrige Ethernet-Leitung ausgestaltet. Die zweite Sende- und Empfangseinheit 14 ist vorzugsweise durch einen BroadR-Reach-Transceiver realisiert. BroadR-Reach-Transceiver basieren auf Gigabit-Ethernet und ermöglichen eine Verwendung nur eines Adernpaares. Mittels Quadratur-Amplituden-Modulation wird ein zu übertragendes Signal bei BroadR-Reach-Transceivern auf ein Trägersignal aufmoduliert, so daß Nutzdaten als Kombination von Amplitude und Phase übertragen werden. In einem gedachten aufgespannten Raum aus Amplitude und Phase werden definierte Positionen mit Bit-Kombinationen belegt. Auf diese Weise können pro Übertragungsvorgang mehrere Datenbits gleichzeitig übertragen werden.

Mit dem verbraucherseitigen Anschluß 20 ist eine Mischereinheit 21 verbunden, die zur frequenzselektiven Ankopplung eines über eine verbraucherseitigen Ethernet-Leitung zu übertragenden Datensignals von der zweite Sende- und Empfangseinheit 14 und eines durch den Spannungs- und Stromregler 15 geregelten Versorgungsstroms an ein gemeinsames Adernpaar ausgestaltet ist. Dabei umfaßt die Mischereinheit 21 einen Übertrager 212, der einerseits mit der zweiten Sende- und Empfangseinheit 14 und andererseits über eine Sperrkondensatoranordnung 211 mit dem verbraucherseitigen Anschluß 20 verbunden ist. Darüber hinaus umfaßt der Spannungs- und Stromregler 15 verbraucherseitig einen Gleichrichter 156, der einerseits über einen Übertrager 155 mit dem zweiten Gleichspannungswandler 153 und andererseits mit dem verbraucherseitigen Anschluß 20 verbunden ist. Der Übertrager 155 und der Gleichrichter 156 können wahlweise auch der Mischereinheit 21 zugeordnet sein.

Entsprechend Figur 4 ermöglicht die vorangehend beschriebene Kopplereinheit 2 eine Verschaltung mehrerer gespeister Power over Ethernet Kommunikationsgeräte 3, die jeweils an die Kopplereinheit 2 angeschlossen sind, innerhalb einer Ringtopologie. Somit lassen sich auf einfache Weise eigensicher gespeiste, redundante Kommunikationssysteme realisieren.

Insgesamt können mit der beschriebenen Kopplereinheit 2 mittels Power over Ethernet gespeiste Automatisierungs- oder Kommunikationsgeräte auch in explosionsgefährdeten Umgebungen unter Nutzung zweiadriger Leitungen verwendet werden. Dies erleichtert eine Nutzung von Power over Ethernet auf Feldebene erheblich. Die Kopplereinheit 2 wirkt datenseitig als Repeater und senkt Versorgungsspannungen und -ströme unter galvanischer Trennung auf ein in explosionsgefährdeten Umgebungen zulässiges Niveau ab.

## Patentansprüche

1. Kopplereinheit zur Energie- und Datenübertragung in explosionsgefährdeten Umgebungen über Ethernet-Leitungen mit
- einem versorgungsseitigen Anschluß für zumindest vieradrige Ethernet-Leitungen zur kombinierten Energie- und Datenübertragung,
- einer mit dem versorgungsseitigen Anschluß verbundenen Weicheneinheit zur frequenzselektiven Auskopplung eines über eine versorgungsseitige Ethernet-Leitung übertragenen Datensignals an eine erste Sende- und Empfangseinheit und eines Versorgungsstroms an einen Spannungs- und Stromregler,
- einer zweiten Sende- und Empfangseinheit, die über eine invertierende medienunabhängige Schnittstelle mit der ersten Sende- und Empfangseinheit verbunden ist, wobei die zweite Sende- und Empfangseinheit zur Datenübertragung über eine zweiadrige Ethernet-Leitung ausgestaltet ist,
- einem verbraucherseitigen Anschluß für Ethernet-Leitungen zur kombinierten Energie- und Datenübertragung über zwei Adern,
- einer mit dem verbraucherseitigen Anschluß verbundenen Mischereinheit zur frequenzselektiven Ankopplung eines über eine verbraucherseitigen Ethernet-Leitung zu übertragenden Datensignals von der zweite Sende- und Empfangseinheit und eines durch den Spannungs- und Stromregler geregelten Versorgungsstroms an ein gemeinsames Adernpaar.

2. Kopplereinheit nach Anspruch 1,
bei der die Weicheneinheit einen ersten Übertrager umfaßt, der mit einem Adernpaar für eine Übertragung von Empfangssignalen verbunden ist, und bei der der erste Übertrager über eine erste Sperrkondensatoranordnung mit einem ersten Anschlußpaar an der ersten Sende- und Empfangseinheit verbunden ist, und bei der die Weicheneinheit einen zweiten Übertrager umfaßt, der mit einem Adernpaar für eine Übertragung von Sendesignalen verbunden ist, und bei der der zweite Übertrager über eine zweite Sperrkondensatoranordnung mit einem zweiten Anschlußpaar an der ersten Sende- und Empfangseinheit verbunden ist, und bei der die Weicheneinheit einen Gleichrichter umfaßt, der versorgungsseitig mit dem Spannungs- und Stromregler verbunden ist.

3. Kopplereinheit nach einem der Ansprüche 1 oder 2,
bei der die Mischereinheit einen Übertrager umfaßt, der mit der zweiten Sende- und Empfangseinheit verbunden ist, und bei der der Übertrager über eine Sperrkondensatoranordnung mit dem verbraucherseitigen Anschluß verbunden ist, und bei der die Mischereinheit einen Gleichrichter umfaßt, der über einen Übertrager an den Spannungs- und Stromregler angeschlossen und mit dem verbraucherseitigen Anschluß verbunden ist.

4. Kopplereinheit nach einem der Ansprüche 1 bis 3,
bei der dem Spannungs- und Stromregler versorgungsseitig ein Spannungsbegrenzer vorgeschaltet ist.

5. Kopplereinheit nach einem der Ansprüche 1 bis 4,
bei der der Spannungs- und Stromregler eine Steuerungseinheit für ein mittels Power over Ethernet gespeistes Gerät umfaßt, die einen ersten Gleichspannungswandler, der für eine Spannungsversorgung der ersten und der zweiten Sende- und Empfangseinheit vorgesehen ist, und einen zweiten Gleichspannungswandler ansteuert, der für eine Spannungsversorgung eines mit dem verbraucherseitigen Anschluß verbundenden Kommunikationsgeräts vorgesehen ist.

6. Kopplereinheit nach einem der Ansprüche 1 bis 5,
bei der die zweite Sende- und Empfangseinheit als BroadR-Reach-Transceiver oder als äquivalenter Transceiver ausgestaltet ist.

7. Kopplereinheit nach einem der Ansprüche 1 bis 6,
bei der die Kopplereinheit in einen Switch integriert ist.

8. Kopplereinheit nach einem der Ansprüche 1 bis 7,
bei der verbraucherseitig eine Mehrzahl von Anschlüssen für Ethernet-Leitungen zur kombinierten Energie- und Datenübertragung über zwei Adern vorgesehen ist.
